# EUROPÄISCHE PATENTSCHRIFT

(11) **EP 2 753 267 B1**
(45) Veröffentlichungstag und Bekanntmachung des Hinweises auf die Patenterteilung: **05.06.2019**
(21) Anmeldenummer: 12769619.3
(22) Anmeldetag: 10.09.2012
(51) Int. Cl.: G02B 27/48, A61C 9/00, A61C 19/04, G02B 21/00, G01B 11/25, G01B 11/00

(54) **VERFAHREN UND VORRICHTUNG ZUR DREIDIMENSIONALEN KONFOKALEN VERMESSUNG**
METHOD AND DEVICE FOR THREE-DIMENSIONAL CONFOCAL MEASUREMENT
PROCÉDÉ ET DISPOSITIF DE MESURE CONFOCALE EN TROIS DIMENSIONS

(30) Priorität: 08.09.2011 DE 102011082349
(43) Veröffentlichungstag der Anmeldung: 16.07.2014
(73) Patentinhaber: Sirona Dental Systems GmbH, 64625 Bensheim (DE)
(72) Erfinder: BANYAY, Matus, 50858 Köln (DE); THIEL, Frank, 64372 Ober-Ramstadt (DE)
(74) Vertreter: Sommer, Peter
(86) Internationale Anmeldenummer: PCT/EP2012/067619
(87) Internationale Veröffentlichungsnummer: WO 2013/034754

(56) Entgegenhaltungen:
- EP-A1- 1 371 939
- EP-B1- 1 505 425
- US-A- 5 563 710
- US-A- 6 115 111
- US-A- 6 121 603
- US-A1- 2004 147 810
- US-A1- 2008 019 127

## Beschreibung

### Technisches Gebiet

Die Erfindung betrifft ein Verfahren und eine Vorrichtung zur dreidimensionalen Vermessung eines Objekts unter Verwendung eines konfokalen Mikroskopieverfahrens. Die Vorrichtung umfasst dabei eine Laserquelle zur Erzeugung eines Beleuchtungsstrahls, eine Fokussieroptik zur Fokussierung des Beleuchtungsstrahls auf mindestens einen Messpunkt auf einer zu vermessenden Oberfläche des Objekts, einen Detektor zur Erfassung eines von der Oberfläche des Objekts zurückgestrahlten Beobachtungsstrahls und eine konfokale Beobachtungsoptik, die nur den auf die Oberfläche des Objekts fokussierten Beobachtungsstrahl zum Detektor durchlässt.

### Stand der Technik

Aus dem Stand der Technik sind mehrere Verfahren und Vorrichtungen zur konfokalen Vermessung bekannt, die eine Laserquelle verwenden. Mit der Verwendung einer Laserquelle ist ein optisches Phänomen verbunden, das als Speckle-Effekt bezeichnet wird. Der Speckle-Effekt ist ein Interferenzphänomen, das sich bei hinreichend kohärenter Beleuchtung von unebenen Objektoberflächen beobachten lässt. Dabei entsteht ein gesprenkeltes Speckle-Muster, das sich als räumliches und zeitabhängiges Rauschen bemerkbar macht. Zur Verminderung des Speckle-Effekts werden meist die Lichtparameter des beleuchtenden Laserstrahls, wie der Einfallswinkel, die Polarisation und die Wellenlänge, modifiziert. Dazu werden meist optische Diffusoren oder mechanisch bewegte optische Elemente verwendet.

In der EP 1 505 425 B1 ist eine Vorrichtung zur konfokalen Abbildung offenbart, wobei die Abbildungsoptik eine optische Komponente umfasst, die beweglich ist, um den Fokuspunkt auf dem Objekt innerhalb eines Bewegungsbereiches und innerhalb der Integrationszeit des Detektors zu einer Anzahl verschiedener Stellen in einer Ebene zu bewegen, die senkrecht zu der optischen Achse verläuft. Dadurch wird die Lage des Fokuspunktes innerhalb der Integrationszeit des Detektors modelliert, so dass das konfokale Signal verschmiert wird und dadurch der Speckle-Effekt vermindert wird.

In der US 4, 155, 630 ist ein Verfahren und eine Vorrichtung zur Verbesserung der Bilderzeugung mit einem kohärenten Vermessungssystem, wobei ein Spiegel mechanisch in eine Schaukelbewegung versetzt wird und damit der Einfallswinkel des Laserstrahls modifiziert wird.

In der US 6, 081, 381 ist ein Verfahren und eine Vorrichtung zur Beseitigung des Speckle-Effekts eines optischen Systems offenbart, wobei ein Diffusor und ein rotierendes Mikrolinsen-Array verwendet werden.

In der US 4,511,220 ist eine Vorrichtung zur Verminderung des Speckle-Effekts eines Lasersystems offenbart, wobei zwei polarisierte Laserstrahlen mit einer bekannten Kohärenzlänge, die zueinander nicht kohärent sind, überlagert werden und damit der Speckle-Effekt minimiert wird.

US 5,563,710 A offenbart ein konfokales Laser- Belichtungssystem und ein Verfahren zur dreidimensionalen Vermessung. Das Laser- Belichtungssystem umfasst eine Laserquelle, einen Strahlteiler, ein fokussierendes Element und einen lichtempfindlichen Detektor. Die Laserquelle kann auch ein Laser Array sein. Im Strahlengang des Laser Array kann auch ein Array aus mehreren Objektiven angeordnet sein.

US 2008/19127A1 offenbart eine Vorrichtung zur Beleuchtung von dreidimensionalen Objekten, insbesondere des Auges. Die Vorrichtung wird insbesondere zur ophthalmologischen Prognose oder Therapie verwendet. Die Vorrichtung umfasst ein Array aus mehreren Lasern, die in einer Ebene oder auf einer gekrümmten Oberfläche angeordnet sind.

EP 1371939 A1 offenbart ein konfokales Abbildungssystem zur Vermessung von dreidimensionalen Objekten, wobei ein konfokales Objektiv zum abbilden auf dem Objekt verwendet wird. Durch mehrere kohärente Laserquellen kann durch Kohärenz ein Speckle-Effekt entstehen. Zur Verminderung dieses Speckle- Effekts kann die Temperatur der Laser modifiziert werden, so dass dies zu einem breiteren Wellenlängenbereich führt. Durch das Vermischen der unterschiedlichen Wellenlängen führt dies wiederum zur Verminderung des Speckle-Effekts. Eine andere Möglichkeit zur Reduktion der Kohärenz ist eine Strom-Modulation der Laserdioden, Modensprünge der Laserdioden oder das Anbringen von Piezo-Vibratoren oder Schwingspulen auf den Faserbündeln, um eine Erschütterung zu induzieren. Diese kontinuierliche Bewegung der Faserbündel würde zu einer Veränderung der Weglänge der Lichtstrahlen und damit zu einer Verminderung des Speckle- Effekts führen.

US 2004/0147810 A1 offenbart eine Endoskop- Sonde zur Vermessung von lebendem Gewebe unter Verwendung eines konfokalen optischen Systems, wobei das konfokale optische System mehrere Laserstrahlen in einem Matrix-Muster auf das Objekt projiziert und dadurch die dreidimensionale Form des Gewebes erfasst.

US 6, 115, 111 offenbart ein System zur konfokalen Vermessung eines dreidimensionalen Objekts unter Verwendung eines Lasers, wobei ein Laser- Array aus mehreren kompakt ausgebildeten Lasern (VCSEL) verwendet wird.

US 6,121,603 A offenbart ein konfokales Abbildungssystem zur Vermessung von dreidimensionalen Objekten, wobei ein Laser- Array aus Mikrolasern und ein Detektor- Array verwendet werden. Das Laser- Array kann auch aus mehreren VCSEL- Lasern aufgebaut sein.

Ein Nachteil der genannten Verfahren besteht darin, dass zur Minimierung des Speckle-Effekts der Laserstrahl auf unterschiedliche Art und Weise unter Verwendung verschiedener beweglicher optischer Mittel modifiziert werden muss. Mit der Ansteuerung und der Integration dieser optischen Mittel ist ein erheblicher technischer Aufwand verbunden. Außerdem ist die Mechanik zur Verstellung dieser optischen Mittel fehleranfällig und kann zu einer Verschlechterung der Bildqualität der mittels der dreidimensionalen konfokalen Vermessung erzeugten 3D-Bilddaten führen.

Die Aufgabe der folgenden Erfindung liegt daher darin, eine Vorrichtung zur dreidimensionalen konfokalen Vermessung bereitzustellen, die auf eine einfache Art und Weise den Speckle-Effekt minimiert.

### Darstellung der Erfindung

Ein Gegenstand der Erfindung ist eine Vorrichtung zur dreidimensionalen Vermessung eines Objekts unter Verwendung eines konfokalen Mikroskopieverfahrens, umfassend eine Laserquelle zur Erzeugung eines Beleuchtungsstrahls, eine Fokussieroptik zur Fokussierung des Beleuchtungsstrahls auf mindestens einen Messpunkt auf einer zu vermessenden Oberfläche des Objekts, einen Detektor zur Erfassung eines von der Oberfläche des Objekts zurückgestrahlten Beobachtungsstrahls, eine konfokale Beobachtungsoptik, die nur den auf die Oberfläche des Objekts fokussierten Beobachtungsstrahl zum Detektor durchlässt. Die Laserquelle umfasst dabei mehrere kohärente Laserelemente, wobei die Laserelemente gleichzeitig Beleuchtungsstrahlen abstrahlen, die auf mehrere Messpunkte auf der Oberfläche des Objekts fokussiert werden, wobei die Laserelemente so angeordnet sind, dass ein Speckle-Effekt in den bei der Vermessung erzeugten 3D-Bilddaten im Vergleich zu einer Vermessung mit einer Vorrichtung, die nur eine punktförmige Laserquelle aufweist, vermindert wird. Die vom Objekt zurückgestrahlten Beobachtungsstrahlen werden dabei durch Beugung an einer Apertur der Beobachtungsoptik verschmiert, so dass Anteile der Beobachtungsstrahlen gemittelt werden und der Detektor einen gemeinsamen Projektionspunkt mit einer gemittelten Intensität detektiert. Die Beugung der Beobachtungsstrahlen an der Apertur der Beobachtungsoptik kann dabei zu Beugungsscheibchen führen, die abhängig von Form und Größe einer konfokal angeordneten Lochblende in der Beobachtungsoptik gestaltet sind.

Nach dem konfokalen Mikroskopierverfahren wird der Beleuchtungsstrahl mittels der Fokussieroptik, die eine Kollimatorlinse umfassen kann, auf einen Messpunkt in einer Fokusebene auf der Oberfläche des zu vermessenden Objekts fokussiert. Der Beobachtungsstrahl wird vom Objekt zurückgestrahlt und gelangt über die Fokussieroptik zur Beobachtungsoptik, die eine Lochblende umfasst. Der Beobachtungsstrahl kann mittels eines Strahlteilers zur Beobachtungsoptik umgelenkt werden. Die Lochblende ist dabei konfokal zur Fokusebene angeordnet, so dass nur das Licht aus der Fokusebene zum Detektor gelangt. Das Objekt kann Punkt für Punkt abgescannt werden, um anschließend aus den Messdaten mittels eines Computers eine dreidimensionale Aufnahme zusammenzusetzen. Der Fokuspunkt kann dabei in Richtung einer optischen Achse der Vorrichtung und orthogonal dazu verschoben werden.

Der zurückgestrahlte Beobachtungsstrahl bedeutet sowohl eine Reflektion als auch eine Streuung an der Oberfläche des Objekts.

Zur Verkürzung der Vermessungsdauer kann die Vorrichtung mehrere konfokale Kanäle aufweisen, wobei jeder konfokale Kanal eine Fokussieroptik mit einer eigenen Kollimatorlinse und eine Beobachtungsoptik mit einer eigenen Lochblende aufweist. Für jeden konfokalen Kanal kann eine eigene Laserquelle oder für alle Kanäle eine gemeinsame Laserquelle verwendet werden. Die Laserquellen können dabei in einer Ebene auf einer Platine angeordnet sein. Die Kollimatorlinsen können in einem Linsen-Array angeordnet sein. Die Lochblenden können ebenfalls in eine Ebene in einem Lochblenden-Array angeordnet sein. Dadurch können gleichzeitig mehrere Fokuspunkte auf das Objekt projiziert werden, um eine Ebene des Objekts zu vermessen. Die Fokuspunkte können dann Schicht für Schicht in Richtung der optischen Achse der Vorrichtung verschoben werden, um das Objekt vollständig zu vermessen. Damit wird mit jedem der konfokalen Kanäle gleichzeitig ein Tiefenscan durchgeführt.

Die einzelnen Laserquellen beziehungsweise jede der Laserquellen in einem Laserquellen-Array umfassen ihrerseits mehrere kohärente Laserelemente. Die Beleuchtungsstrahlen der Laserelemente einer Laserquelle werden auf ein Bündel von Messpunkten auf der Oberfläche des Objekts fokussiert. Bei einem Laserquellen-Array werden die Beleuchtungsstrahlen auf mehrere Bündel von Messpunkten fokussiert. Die Messpunkte innerhalb des Bündels sind so nah beieinander angeordnet, dass sie mittels der Beobachtungsoptik nicht aufgelöst werden können und dadurch die Anteile jedes der Laserelemente verschmieren. Die Anteile der Beobachtungsstrahlen der Laserelemente werden demnach gemittelt, so dass auf dem Detektor nur ein Messpunkt mit einer gemittelten Intensität registriert wird. Dadurch wird der Speckle-Effekt vermindert.

Die verminderte Auflösung der Beobachtungsoptik kann beispielsweise durch die Beugung der Laserstrahlen an einer Apertur der gesamten Beobachtungsoptik verursacht werden, die zu sogenannten, abhängig von der Form der Blende, Beugungsscheibchen führt. Das optische Design der Beobachtungsoptik wirkt damit als ein limitierender Faktor für die Auflösung. Falls die Lochblende nicht korrekt konfokal positioniert ist oder die Größe der Lochblende in der Konfokalebene falsch ist, kann dies ebenfalls in einer verminderten Auflösung des gesamten optischen Systems führen.

Ein Vorteil dieser Vorrichtung besteht darin, dass die Laserelemente der Laserquelle auf ein Bündel von Messpunkten fokussiert werden, um den Speckle-Effekt zu vermindern, so dass im Vergleich zu bekannten Verfahren keine mechanischen Mittel zur Modifikation des Laserstrahls erforderlich sind.

Ein weiterer Vorteil der vorliegenden Vorrichtung besteht darin, dass die Vorrichtung kompakter als herkömmliche Vorrichtungen gestaltet werden kann, da mechanische Mittel und eine Ansteuerung dieser nicht erforderlich ist.

Vorteilhafterweise können die Laserelemente Beleuchtungsstrahlen abstrahlen, die in ihrer Wellenlänge moduliert sind und eine voneinander abweichende Wellenlänge innerhalb eines Wellenlängenbereichs aufweisen.

Dadurch weichen die Wellenlängen der einzelnen Laserelemente voneinander ab, so dass zusätzlich durch die Modulation der Wellenlänge der Speckle-Effekt vermindert wird. Der Wellenlängenbereich ist dabei so groß gewählt, dass der Speckle-Effekt bis zu einem erforderlichen Maß verringert wird.

Vorteilhafterweise kann der Wellenlängenbereich innerhalb dessen die Wellenlänge der Laserelemente moduliert ist höchstens 60 nm betragen.

Dadurch wird die Interferenz zwischen den Beobachtungsstrahlen der einzelnen Laserelemente noch stärker vermindert und führt daher zu einem schwächeren Speckle-Effekt.

Vorteilhafterweise können die Wellenlängen der einzelnen Laserelemente innerhalb des Wellenlängenbereichs nach einer zufälligen Verteilung verteilt sein.

Dadurch sind die Wellenlängen nicht nach einem bestimmten Muster innerhalb des Wellenlängenbereichs verteilt, so dass die Interferenz zwischen den Beobachtungsstrahlen der Laserelemente gering ist.

Vorteilhafterweise können die Laserelemente Beleuchtungsstrahlen gleicher Wellenlänge abstrahlen.

Bei dieser Alternative der Vorrichtung strahlen alle Laserelemente Laserlicht gleicher Wellenlänge ab, so dass die

Interferenz zwischen den Beobachtungsstrahlen der Laserelemente und damit der Speckle-Effekt lediglich durch die Verteilung der Messpunkte innerhalb des Bündelbereichs auf dem Objekt minimiert wird.

Vorteilhafterweise können die Laserelemente Laserdioden sein, die nebeneinander auf einer gemeinsamen Platine angeordnet sind.

Dadurch kann die Laserquelle sehr kompakt aufgebaut sein, um die Abmessungen der vorliegenden Vorrichtung, insbesondere im Hinblick auf die Verwendung im dentalen Bereich, gering zu halten.

Vorteilhafterweise können die Laserelemente VCSEL-Elemente sein, die nebeneinander auf einem VCSEL-Chip angeordnet sind.

Das VCSEL-Element (Vertical Cavity Surface Emitting Laser)ist ein Halbleiterlaser, bei dem das Licht senkrecht zur Ebene eines Halbleiterchips abgestrahlt wird. Im Gegensatz dazu wird bei herkömmlichen Kantenemittern das Licht an einer oder zwei Flanken des Halbleiterchips abgestrahlt. Die Vorteile der Verwendung eines VCSEL-Elements bestehen in den geringen Herstellungskosten, im geringen Stromverbrauch, einem gegenüber den Kantenemittern verbesserten Strahlprofil, der Abstimmbarkeit der Wellenlänge und der hohen intrinsischen Modulationsbandbreite. Außerdem können VCSEL-Elemente in Gitteranordnungen in einer Ebene hergestellt werden.

Vorteilhafterweise können die Laserelemente im gleichen Abstand zueinander entlang der Zeilen und der Spalten in einer zweidimensionalen orthogonalen Matrix, spiralförmig oder in Form von konzentrischen Kreisen angeordnet sein.

Dadurch sind die Laserlemente in einem Laserlemente-Array in Form einer orthogonalen Matrix angeordnet, das auf einfache Art und Weise vollautomatisch hergestellt werden kann.

Vorteilhafterweise können die Laserelemente in einem Laserlemente-Array nach einer zufälligen Verteilung angeordnet sein.

Dadurch werden Interferenzen, die durch wiederkehrende Muster entstehen können, vermindert.

Vorteilhafterweise kann eine Ebene, in der die Laserelemente angeordnet sind, senkrecht zu einer Abstrahlrichtung der Beleuchtungsstrahlen ausgerichtet sein.

Dadurch sind die Laserlemente in einer Ebene senkrecht zur optischen Achse der Vorrichtung angeordnet, so dass die Verteilung der Messpunkte auf dem Objekt zu einer Verminderung der Interferenz und damit des Speckle-Effekts führt.

Vorteilhafterweise kann die Laserquelle mindestens 50 Laserelemente umfassen.

Dadurch ist die Anzahl der Laserelemente ausreichend, um den Speckle-Effekt bis zu einem erforderlichen Maß zu vermindern.

Vorteilhafterweise kann die Vorrichtung in ihren Abmessungen so ausgestaltet sein, dass sie in ein herkömmliches dentales Handstück integrierbar ist und zur Vermessung von Zähnen als Objekt geeignet ist.

Dadurch kann die Vorrichtung im dentalen Bereich zur Vermessung von Zähnen und anderen dentalen Objekten verwendet werden.

Ein weiterer Gegenstand der Erfindung ist ein Verfahren zur dreidimensionalen Vermessung eines Objekts unter Verwendung eines konfokalen Mikroskopieverfahrens, wobei eine Laserquelle einen Beleuchtungsstrahl abstrahlt, wobei der Beleuchtungsstrahl auf mindestens einen Messpunkt auf einer zu vermessenden Oberfläche des Objekts fokussiert wird, wobei ein von der Oberfläche des Objekts zurückgestrahlter Beobachtungsstrahl mittels eines Detektors erfasst wird, wobei eine Beobachtungsoptik eine Blende aufweist, die nur den auf die Oberfläche des Objekts fokussierten Beobachtungsstrahl zum Detektors durchlässt. Die Laserquelle umfasst dabei mehrere kohärente Laserelemente, wobei die Laserelemente während der Vermessung gleichzeitig Beleuchtungsstrahlen abstrahlen, die auf mehrere Messpunkte auf der Oberfläche des Objekts fokussiert werden, wobei die Laserelemente so angeordnet sind, dass ein Speckle-Effekt in den bei der Vermessung erzeugten 3D-Bilddaten vermindert wird. Die vom Objekt zurückgestrahlten Beobachtungsstrahlen werden dabei durch Beugung an einer Apertur der Beobachtungsoptik verschmiert, so dass Anteile der Beobachtungsstrahlen gemittelt werden und der Detektor einen gemeinsamen Projektionspunkt mit einer gemittelten Intensität detektiert. Die Beugung der Beobachtungsstrahlen an der Apertur der Beobachtungsoptik kann dabei zu Beugungsscheibchen führen, die abhängig von Form und Größe einer konfokal angeordneten Lochblende in der Beobachtungsoptik gestaltet sind.

Ein Vorteil dieses Verfahrens ist, dass der Speckle-Effekt auf einfache Art und Weise minimiert wird, ohne mechanische Mittel, wie bei dem herkömmlichen Verfahren, zu verwenden.

Dadurch kann die Beobachtungsoptik die einzelnen Messpunkte der Laserelemente nicht auflösen, so dass auf dem Detektor lediglich der gemeinsamen Projektionspunkt mit einer gemittelten Intensität detektiert wird.

Vorteilhafterweise können die Laserelemente Beleuchtungsstrahlen abstrahlen, die in ihrer Wellenlänge moduliert werden und eine voneinander abweichende Wellenlänge innerhalb eines Wellenlängenbereichs aufweisen.

Dadurch wird die Interferenz zwischen den Beobachtungsstrahlen und damit der Speckle-Effekt zusätzlich zur lokalen Modulation durch die Verteilung der Laserelemente noch durch die Modulation der Wellenlänge der einzelnen Laserelemente vermindert.

Vorteilhafterweise können die Wellenlängen der einzelnen Laserelemente innerhalb des Wellenlängenbereichs nach einer zufälligen Verteilung verteilt werden.

Durch die zufällige Verteilung der Wellenlänge innerhalb des Wellenlängenbereichs wird die Interferenz zwischen den Beobachtungsstrahlen besonders wirksam vermindert.

### Kurzbeschreibung der Zeichnungen

Ausführungsbeispiele der Erfindung sind in der Zeichnung dargestellt. Es zeigt die
- Fig. 1: eine herkömmliche Vorrichtung zur dreidimensionalen Vermessung;
- Fig. 2: eine Vorrichtung zur dreidimensionalen Vermessung nach der Erfindung;
- Fig. 3: eine weitere Ausführungsform der Vorrichtung mit mehreren konfokalen Kanälen;
- Fig. 4: eine Skizze der Laserquelle mit VCSEL-Elementen;
- Fig. 5: einer Anordnung der Laserelemente in Form von konzentrischen Kreisen;
- Fig. 6: einer Anordnung der Laserelemente in Form einer Spirale.

### Ausführungsbeispiele

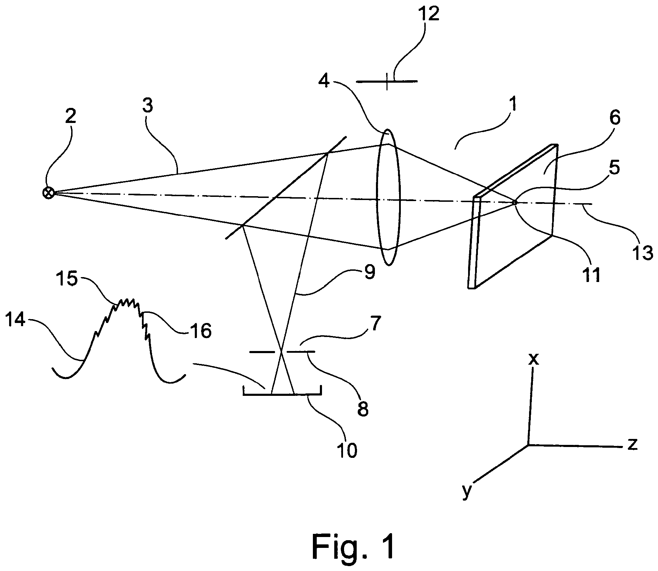

Die Fig.1 zeigt eine herkömmliche aus dem Stand der Technik bekannte Vorrichtung 1 zur dreidimensionalen Vermessung eines Objekts unter Verwendung eines konfokalen Mikroskopieverfahrens. Die Vorrichtung 1 umfasst eine einfache Laserquelle 2 zur Erzeugung eines Beleuchtungsstrahls 3, eine Fokussieroptik 4 aufweisend eine Kollimationslinse, die den Beleuchtungsstrahl 3 auf einen Messpunkt 5 auf eine zu vermessende Oberfläche des Objekts 6 fokussiert. Die Vorrichtung weist weiterhin eine Beobachtungsoptik 7 mit einer Lochblende 8 auf, die konfokal zur Fokalebene der Fokussieroptik 4 angeordnet ist, so dass sie nur einen von der Oberfläche des Objekts 6 zurückgestrahlten Beobachtungsstrahl 9 zu einem Detektor 10 durchlässt. Der Fokuspunkt 11 wird durch Verstellung der Fokussieroptik 4, die durch die Pfeile 12 dargestellt ist, solange entlang einer optischen Achse 13 der Vorrichtung 1 verschoben, bis der Fokuspunkt 11 auf die Oberfläche des Objekts 6 trifft und der Messpunkt 5 mittels des Detektors 10 detektiert werden kann. Durch diesen Tiefenscan kann die z-Koordinate in Richtung der optischen Achse bestimmt werden. Durch Verschiebung des Fokuspunktes 11 entlang der x-Achse und der y-Achse wird dann das Objekt 6 Punkt für Punkt vollständig vermessen. Aus den Messdaten werden dann mittels eines Computers dreidimensionale Bilddaten des Objekts 6 berechnet. Bei der konfokalen Vermessung mittels der herkömmlichen Vorrichtung 1 von Objekten 6, die eine unebene Fläche aufweisen, tritt ein Interferenzphänomen auf, das als Speckle-Effekt bekannt ist. Beim Tiefenscan für jeden der Messpunkte 5 wird in Abhängigkeit von der z-Koordinate ein Tiefenprofil 14 erzeugt. Anhand eines maximalen Werts 15 des Tiefenprofils kann dann die z-Koordinate des Messpunkts auf der Oberfläche des Objekts 6 ermittelt werden. Der Speckle-Effekt führt zum Signalrauschen 16, das mit der Intensität zunimmt, und somit die konfokale Vermessung verfälscht.

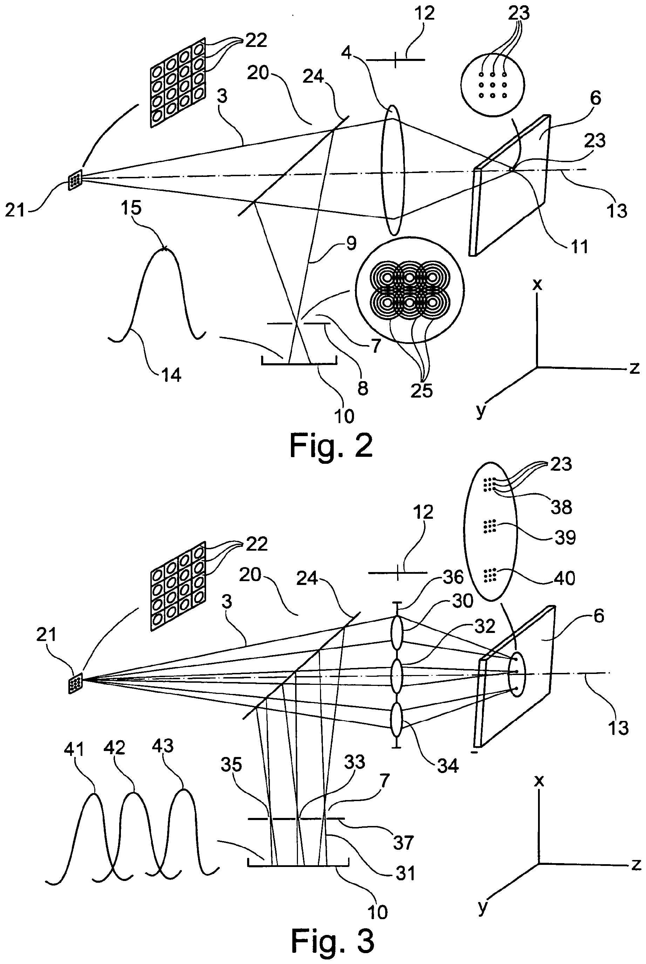

Die Fig. 2 zeigt eine Vorrichtung 20 nach der vorliegenden Erfindung. Im Unterschied zur herkömmlichen Vorrichtung 1 aus Fig. 1 weist die Vorrichtung 20 eine Laserquelle 21 auf, die aus mehreren Laserelementen 22 aufgebaut ist. In der dargestellten Ausführungsform sind die Laserelemente 22 in Form einer orthogonalen Matrix auf einer Platine angeordnet. Die Laserelemente 22 strahlen gleichzeitig Beleuchtungsstrahlen 3 ab, die auf mehrere Messpunkte 23 auf der Oberfläche des Objekts 6 fokussiert werden. Die Messpunkte 23 sind folglich ebenfalls in Form einer orthogonalen Matrix angeordnet. Die zurückgestrahlten Beobachtungsstrahlen 9 werden mittels eines Strahlteilers 24 zur Beobachtungsoptik mit der Lochblende 8 abgelenkt und treffen auf den Detektor 10 auf. Die Beugung der Beobachtungsstrahlen 9 an einer Apertur der gesamten Beobachtungsoptik verursacht für jeden Beobachtungsstrahl so genannte Beugungsscheibchen 25. Dadurch kann die Beobachtungsoptik 7 die einzelnen Beobachtungsstrahlen 9 der Messpunkte 23 nicht auflösen, so dass die Anteile der Beobachtungsstrahlen 9 verschmiert werden und durch den Mittlungseffekt der Detektor lediglich einen einzelnen Messpunkt mit einer gemittelten Intensität detektiert. Dadurch werden die Interferenz zwischen den Beobachtungsstrahlen und damit auch der Speckle-Effekt vermindert. Das Tiefenprofil 14 verläuft nun im Vergleich zum Tiefenprofil aus Fig. 1 glatt, so dass der Maximalpunkt 15 und damit die z-Koordinate der Oberfläche des Objekts genauer ermittelt werden kann.

In Fig. 3 ist eine weitere Ausführungsform der Vorrichtung 20 dargestellt, wobei im Vergleich zu der Vorrichtung aus Fig. 2 mehrere konfokale Kanäle vorhanden sind. Ein erster konfokaler Kanal weist eine erste Kollimatorlinse 30 und eine erste Lochblende 31 auf. Ein zweiter konfokaler Kanal weist eine zweite Kollimatorlinse 32 und eine zweite Lochblende 33 auf. Der dritte konfokale Kanal weist eine dritte Kollimatorlinse 34 und eine dritte Lochblende 35 auf. Die drei konfokalen Kanäle verwenden die Beleuchtungsstrahlen 3 der gemeinsamen Laserquelle 21. Alternativ dazu kann jeder konfokale Kanal eine eigene Laserquelle aufweisen. Die Kollimatorlinsen sind in einem Linsen-Array 36 in einer Ebene angeordnet. Die Lochblenden 31, 33 und 35 sind in einem Lochblenden-Array 37 in einer Ebene angeordnet. Durch den dargestellten optischen Aufbau wird ein erstes Bündel 38 von Messpunkten 23 des ersten konfokalen Kanals, ein zweites Bündel 39 und ein drittes Bündel 40 auf die Oberfläche des Objekts 6 projiziert. Dadurch können gleichzeitig drei Tiefenscans durchgeführt werden, um drei z-Koordinaten des Objekts 6 zu ermitteln. Bei mehreren konfokalen Kanälen, beispielsweise bei einer Matrix von 100 x 100 Kanälen kann das Objekt 6 vollständig Schicht für Schicht vermessen werden. Dadurch wird die Vermessungsdauer verkürzt, da ein Abscannen des Objekts 6 entlang der x-Achse und der y-Achse entfällt. Der Tiefenscan mit dem ersten Kanal ergibt ein erstes Tiefenprofil 41. Der Tiefenscan mit dem zweiten Kanal ergibt ein zweites Tiefenprofil 42. Der Tiefenscan mit dem dritten Kanal ergibt ein drittes Tiefenprofil 43.

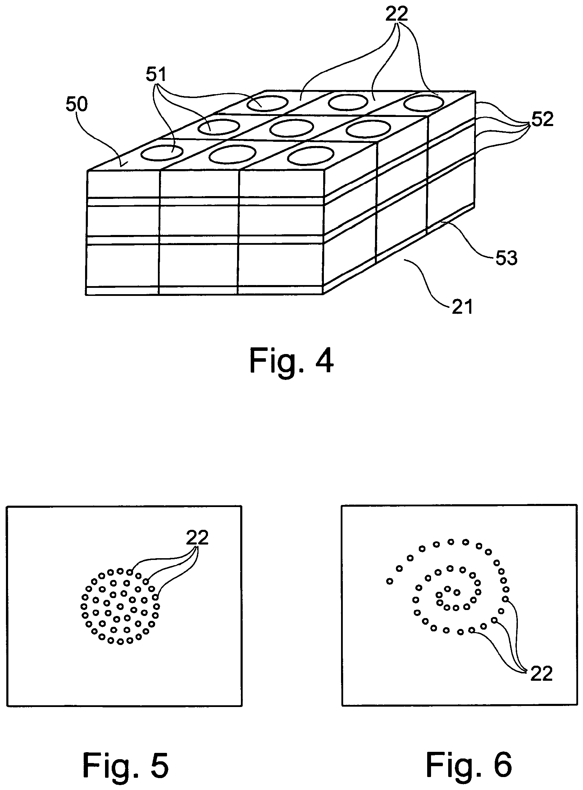

Die Fig. 4 zeigt eine Skizze der Laserquelle 21 aus Fig. 2 und Fig. 3, wobei die Laserelemente 22 VCSEL-Elemente sind, die nebeneinander auf einem Chip angeordnet sind. Jedes VCSEL-Element ist ein Halbleiterlaser, bei dem das Laserlicht senkrecht zu einer Ebene 50 abgestrahlt wird. Die lichterzeugenden Elemente 51 sind kreisförmig dargestellt. Die VCSEL-Elemente sind in Form einer orthogonalen Matrix angeordnet. Die VCSEL-Elemente sind aus mehreren Halbleiterschichten 52 aufgebaut und weisen an der Unterseite elektrische Kontakte 53 auf, so dass eine direkte Kontaktierung erleichtert wird.

Die Fig. 5 zeigt eine Skizze einer Anordnung der Laserelemente 22 in Form von konzentrischen Kreisen. Alternativ dazu zeigt die Fig. 6 eine Skizze einer Anordnung der Laserelemente 22 in Form einer Spirale.

### Bezugszeichenliste

- 1: herkömmliche Vorrichtung
- 2: Laserquelle
- 3: Beleuchtungsstrahl
- 4: Fokussieroptik
- 5: Messpunkt
- 6: Objekt
- 7: Beobachtungsoptik
- 8: Lochblende
- 9: Beobachtungsstrahl
- 10: Detektor
- 11: Fokuspunkt
- 12: Pfeile
- 13: optische Achse
- 14: Tiefenprofil
- 15: maximaler Wert
- 16: Signalrauschen
- 20: Vorrichtung nach der Erfindung
- 21: Laserquelle
- 22: Laserelemente
- 23: Messpunkte
- 24: Strahlteiler
- 25: Beugungsscheibchen
- 30: erste Kollimatorlinse
- 31: erste Lochblende
- 32: zweite Kollimatorlinse
- 33: zweite Lochblende
- 34: dritte Kollimatorlinse
- 35: dritte Lochblende
- 36: Linsen-Array
- 37: Lochblenden-Array
- 38: erstes Bündel
- 39: zweites Bündel
- 40: drittes Bündel
- 41: erstes Tiefenprofil
- 42: zweites Tiefenprofil
- 43: drittes Tiefenprofil
- 50: Ebene
- 51: lichterzeugende Elemente
- 52: Halbleiterschichten
- 53: elektrische Kontakte

## Patentansprüche

1. Vorrichtung (20) zur dreidimensionalen Vermessung eines Objekts (6) unter Verwendung eines konfokalen Mikroskopieverfahrens, umfassend eine Laserquelle (21) zur Erzeugung eines Beleuchtungsstrahls (3), eine Fokussieroptik (4) zur Fokussierung des Beleuchtungsstrahls (3) auf mindestens einen Messpunkt (5, 23) auf einer zu vermessenden Oberfläche des Objekts (6), einen Detektor (10) zur Erfassung eines von der Oberfläche des Objekts (6) zurückgestrahlten Beobachtungsstrahls (9), eine konfokale Beobachtungsoptik (7), die nur den auf die Oberfläche des Objekts (6) fokussierten Beobachtungsstrahl (9) zum Detektor (10) durchlässt, **dadurch gekennzeichnet, dass** die Laserquelle (21) mehrere kohärente Laserelemente (22) umfasst, wobei die Laserelemente (22) eingerichtet sind, um gleichzeitig Beleuchtungsstrahlen (3) abzustrahlen, die auf mehrere Messpunkte (5, 23) auf der Oberfläche des Objekts (6) fokussiert werden, wobei die Laserelemente (22) so angeordnet sind, dass ein Speckle-Effekt in den bei der Vermessung erzeugten 3D-Bilddaten vermindert wird, wobei die konfokale Beobachtungsoptik (7) eine Apertur und eine konfokal angeordnete Lochblende (8) aufweist, wobei die vom Objekt (6) zurückgestrahlten Beobachtungsstrahlen (9) durch Beugung an der Apertur der Beobachtungsoptik (7) verschmiert werden, so dass Anteile der Beobachtungsstrahlen (9) gemittelt werden und der Detektor (10) einen gemeinsamen Projektionspunkt mit einer gemittelten Intensität detektiert, wobei die Beugung der Beobachtungsstrahlen (9) an der Apertur der Beobachtungsoptik (7) zu Beugungsscheibchen (25) führt, die abhängig von Form und Größe der konfokal angeordneten Lochblende (8) in der Beobachtungsoptik (7) gestaltet sind.

2. Vorrichtung (20) nach Anspruch 1, **dadurch gekennzeichnet, dass** die Laserelemente (22) eingerichtet sind, um Beleuchtungsstrahlen (3) abzustrahlen, die in ihrer Wellenlänge moduliert sind und eine voneinander abweichende Wellenlänge innerhalb eines Wellenlängenbereichs aufweisen.

3. Vorrichtung (20) nach Anspruch 2, **dadurch gekennzeichnet, dass** der Wellenlängenbereich innerhalb dessen die Wellenlänge der Laserelemente (22) moduliert ist höchstens 60 nm beträgt.

4. Vorrichtung (20) nach Anspruch 2 oder 3, **dadurch gekennzeichnet, dass** die Wellenlängen der einzelnen Laserelemente (22) innerhalb des Wellenlängenbereichs nach einer zufälligen Verteilung verteilt sind.

5. Vorrichtung (20) nach Anspruch 1, **dadurch gekennzeichnet, dass** die Laserelemente (22) Beleuchtungsstrahlen (3) gleicher Wellenlänge abstrahlen.

6. Vorrichtung (20) nach einem der Ansprüche 1 bis 5, **dadurch gekennzeichnet, dass** die Laserelemente (22) im gleichen Abstand zueinander entlang der Zeilen und der Spalten in einer zweidimensionalen orthogonalen Matrix, spiralförmig oder in Form von konzentrischen Kreisen angeordnet sind.

7. Vorrichtung (20) nach einem der Ansprüche 1 bis 6, **dadurch gekennzeichnet, dass** eine Ebene, in der die Laserelemente (22) angeordnet sind, senkrecht zu einer Abstrahlrichtung der Beleuchtungsstrahlen (3) ausgerichtet ist.

8. Vorrichtung (20) nach einem der Ansprüche 1 bis 7, **dadurch gekennzeichnet, dass** die Laserquelle (21) mindestens 50 Laserelemente (22) umfasst.

9. Vorrichtung (20) nach einem der Ansprüche 1 bis 8, **dadurch gekennzeichnet, dass** die Vorrichtung (20) in ihren Abmessungen so ausgestaltet ist, dass sie in ein herkömmliches dentales Handstück integrierbar ist und zur Vermessung von Zähnen als Objekt (6) geeignet ist.

10. Verfahren zur dreidimensionalen Vermessung eines Objekts (6) unter Verwendung eines konfokalen Mikroskopieverfahrens, wobei eine Laserquelle (21) einen Beleuchtungsstrahl (3) abstrahlt, wobei der Beleuchtungsstrahl (3) auf mindestens einen Messpunkt (5, 23) auf einer zu vermessenden Oberfläche des Objekts (6) fokussiert wird, wobei ein von der Oberfläche des Objekts (6) zurückgestrahlter Beobachtungsstrahl (9) mittels eines Detektors (10) erfasst wird, wobei eine Beobachtungsoptik (7) eine Blende aufweist, die nur den auf die Oberfläche des Objekts (6) fokussierten Beobachtungsstrahl (9) zum Detektor (10) durchlässt, **dadurch gekennzeichnet, dass** die Laserquelle (21) mehrere kohärente Laserelemente (22) umfasst, wobei die Laserelemente (22) gleichzeitig Beleuchtungsstrahlen (3) abstrahlen, die auf mehrere Messpunkte (5, 23) auf der Oberfläche des Objekts (6) fokussiert werden, wobei die Laserelemente (22) so angeordnet sind, dass ein Speckle-Effekt in den bei der Vermessung erzeugten 3D-Bilddaten vermindert wird, wobei die vom Objekt (6) zurückgestrahlten Beobachtungsstrahlen (9) durch Beugung an einer Apertur der Beobachtungsoptik (7) verschmiert werden, so dass Anteile der Beobachtungsstrahlen (9) gemittelt werden und der Detektor (10) einen gemeinsamen Projektionspunkt mit einer gemittelten Intensität detektiert, wobei die Beugung der Beobachtungsstrahlen (9) an der Apertur der Beobachtungsoptik (7) zu Beugungsscheibchen (25) führt, die abhängig von Form und Größe einer konfokal angeordneten Lochblende (8) in der Beobachtungsoptik (7) gestaltet sind.

11. Verfahren nach Anspruch 10, **dadurch gekennzeichnet, dass** die Laserelemente (22) Beleuchtungsstrahlen (3) abstrahlen, die in ihrer Wellenlänge moduliert werden und eine voneinander abweichende Wellenlänge innerhalb eines Wellenlängenbereichs aufweisen.

12. Verfahren nach Anspruch 11, **dadurch gekennzeichnet, dass** die Wellenlängen der einzelnen Laserelemente (22) innerhalb des Wellenlängenbereichs nach einer zufälligen Verteilung verteilt werden.

## Claims

1. Apparatus (20) for the three-dimensional measurement of an object (6) using a confocal microscopy method, comprising a laser source (21) for producing an illumination beam (3), a focusing optical system (4) for focusing the illumination beam (3) onto at least one measuring point (5, 23) on a surface of the object (6) to be measured, a detector (10) for detecting an observation beam (9) reflected by the surface of the object (6), a confocal observation optical system (7) which allows only the observation beam (9) focused onto the surface of the object (6) to pass through to the detector (10), **characterized in that** the laser source (21) comprises a plurality of coherent laser elements (22), wherein the laser elements (22) are configured to simultaneously emit illumination beams (3) that are focused onto a plurality of measurement points (5, 23) on the surface of the object (6), wherein the laser elements (22) are arranged such that a speckle effect in the 3D image data generated during the measurement is reduced, wherein the confocal observation optical system (7) comprises an aperture and a confocally arranged pinhole aperture (8), wherein the observation beams (9) reflected by the object (6) are blurred by diffraction at the aperture of the observation optical system (7), so that portions of the observation beams (9) are averaged and the detector (10) detects a common projection point having an averaged intensity, wherein the diffraction of the observation beams (9) at the aperture of the observation optical system (7) results in diffraction disks (25), the form of which is a function of the shape and size of the confocally arranged pinhole aperture (8) in the observation optical system (7) .

2. Apparatus (20) according to Claim 1, **characterized in that** the laser elements (22) are configured to emit illumination beams (3), the wavelengths of which are modulated and the wavelengths of which differ from one another within a wavelength range.

3. Apparatus (20) according to Claim 2, **characterized in that** the wavelength range within which the wavelength of the laser elements (22) is modulated is at most 60 nm.

4. Apparatus (20) according to Claim 2 or 3, **characterized in that** the wavelengths of the individual laser elements (22) are distributed within the wavelength range according to a random distribution.

5. Apparatus (20) according to Claim 1, **characterized in that** the laser elements (22) emit illumination beams (3) of the same wavelength.

6. Apparatus (20) according to any one of Claims 1 to 5, **characterized in that** the laser elements (22) are arranged equidistant from one another along the lines and the columns in a two-dimensional orthogonal matrix, helically or in the shape of concentric circles.

7. Apparatus (20) according to any one of Claims 1 to 6, **characterized in that** a plane in which the laser elements (22) are arranged is perpendicular to an emission direction of the illumination beams (3).

8. Apparatus (20) according to any one of Claims 1 to 7, **characterized in that** the laser source (21) comprises at least 50 laser elements (22).

9. Apparatus (20) according to any one of Claims 1 to 8, **characterized in that** the dimensions of the apparatus (20) are designed such that said apparatus can be integrated into a conventional dental handpiece and is suitable for measuring teeth as the object (6).

10. Method for the three-dimensional measurement of an object (6) using a confocal microscopy method, wherein a laser source (21) emits an illumination beam (3), wherein the illumination beam (3) is focused onto at least one measuring point (5, 23) on a surface of the object (6) to be measured, wherein an observation beam (9) reflected by the surface of the object (6) is detected by a detector (10), wherein an observation optical system (7) comprises an aperture which allows only the observation beam (9) focused onto the surface of the object (6) to pass through to the detector (10), **characterized in that** the laser source (21) comprises a plurality of coherent laser elements (22), wherein the laser elements (22) simultaneously emit illumination beams (3) that are focused onto a plurality of measurement points (5, 23) on the surface of the object (6), wherein the laser elements (22) are arranged such that a speckle effect in the 3D image data generated during the measurement is reduced, wherein the observation beams (9) reflected by the object (6) are blurred by diffraction at an aperture of the observation optical system (7), so that portions of the observation beams (9) are averaged and the detector (10) detects a common projection point having an averaged intensity, wherein the diffraction of the observation beams (9) at the aperture of the observation optical system (7) results in diffraction disks (25), the form of which is a function of the shape and size of a confocally arranged pinhole aperture (8) in the observation optical system (7).

11. Method according to Claim 10, **characterized in that** the laser elements (22) emit illumination beams (3), the wavelengths of which are modulated and the wavelengths of which differ from one another within a wavelength range.

12. Method according to Claim 11, **characterized in that** the wavelengths of the individual laser elements (22) are distributed within the wavelength range according to a random distribution.

## Revendications

1. Dispositif (20) destiné à la mesure tridimensionnelle d'un objet (6) grâce à un procédé de microscopie confocale, comprenant une source laser (21) servant à générer un faisceau d'éclairage (3), une optique de focalisation (4) servant à focaliser le faisceau d'éclairage (3) sur au moins un point de mesure (5, 23) présent sur une surface à mesurer de l'objet (6), un détecteur (10) servant à détecter un faisceau d'observation (9) renvoyé par la surface de l'objet (6), une optique d'observation (7) confocale qui ne laisse passer vers le détecteur (10) que le faisceau d'observation (9) focalisé sur la surface de l'objet (6), **caractérisé en ce que** la source laser (21) comprend plusieurs éléments laser (22) cohérents, lesdits éléments laser (22) étant agencés pour émettre simultanément des faisceaux d'éclairage (3) qui sont focalisés sur plusieurs points de mesure (5, 23) présents sur la surface de l'objet (6), lesdits éléments laser (22) étant disposés de manière à réduire un effet de chatoiement dans les données d'image 3D générées lors de la mesure, ladite optique d'observation (7) confocale présentant une ouverture et un diaphragme perforé (8) disposé de manière confocale, lesdits faisceaux d'observation (9) renvoyés par l'objet (6) étant diffusés par diffraction au niveau de l'ouverture de l'optique d'observation (7) de sorte que des parties des faisceaux d'observation (9) sont moyennées et que le détecteur (10) détecte un point de projection commun avec une intensité moyennée, ladite diffraction des faisceaux d'observation (9) au niveau de l'ouverture de l'optique d'observation (7) conduisant à des taches d'Airy (25) qui se forment en fonction de la forme et de la taille du diaphragme perforé (8) disposé de manière confocale dans l'optique d'observation (7).

2. Dispositif (20) selon la revendication 1, **caractérisé en ce que** les éléments laser (22) sont agencés pour émettre des faisceaux d'éclairage (3) dont la longueur d'onde est modulée et qui présentent des longueurs d'onde différentes les unes des autres au sein d'une plage de longueurs d'ondes.

3. Dispositif (20) selon la revendication 2, **caractérisé en ce que** la plage de longueurs d'onde au sein de laquelle la longueur d'onde des éléments laser (22) est modulée est d'au plus 60 nm.

4. Dispositif (20) selon la revendication 2 ou 3, **caractérisé en ce que** les longueurs d'onde des divers éléments laser (22) sont réparties au sein de la plage de longueurs d'onde selon une répartition aléatoire.

5. Dispositif (20) selon la revendication 1, **caractérisé en ce que** les éléments laser (22) émettent des faisceaux d'éclairage (3) de longueur d'onde identique.

6. Dispositif (20) selon une des revendications 1 à 5, **caractérisé en ce que** les éléments laser (22) sont disposés en forme de spirales ou en forme de cercles concentriques à distance égale les uns des autres le long des lignes et des colonnes d'une matrice bidimensionnelle orthogonale.

7. Dispositif (20) selon une des revendications 1 à 6, **caractérisé en ce qu'**un plan, dans lequel les éléments laser (22) sont disposés, est dirigé perpendiculairement à une direction d'émission des faisceaux d'éclairage (3).

8. Dispositif (20) selon une des revendications 1 à 7, **caractérisé en ce que** la source laser (21) comprend au moins 50 éléments laser (22).

9. Dispositif (20) selon une des revendications 1 à 8, **caractérisé en ce que** le dispositif (20) est conçu avec des dimensions telles qu'il peut être intégré dans une pièce à main dentaire classique et qu'il est adapté à la mesure de dents en guise d'objet (6).

10. Procédé de mesure tridimensionnelle d'un objet (6) grâce à un procédé de microscopie confocale, dans lequel une source laser (21) émet un faisceau d'éclairage (3), ledit faisceau d'éclairage (3) étant focalisé sur au moins un point de mesure (5, 23) présent sur une surface à mesurer de l'objet (6), un faisceau d'observation (9) renvoyé par la surface de l'objet (6) étant détecté au moyen d'un détecteur (10), une optique d'observation (7) présentant un diaphragme qui ne laisse passer vers le détecteur (10) que le faisceau d'observation (9) focalisé sur la surface de l'objet (6), **caractérisé en ce que** la source laser (21) comprend plusieurs éléments laser (22) cohérents, lesdits éléments laser (22) émettant simultanément des faisceaux d'éclairage (3) qui sont focalisés sur plusieurs points de mesure (5, 23) présents sur la surface de l'objet (6), lesdits éléments laser (22) étant disposés de manière à réduire un effet de chatoiement dans les données d'image 3D générées lors de la mesure, lesdits faisceaux d'observation (9) renvoyés par l'objet (6) étant diffusés par diffraction au niveau d'une ouverture de l'optique d'observation (7), de sorte que des parties des faisceaux d'observation (9) sont moyennées et que le détecteur (10) détecte un point de projection commun avec une intensité moyennée, ladite diffraction des faisceaux d'observation (9) au niveau de l'ouverture de l'optique d'observation (7) conduisant à des taches d'Airy (25) qui se forment en fonction de la forme et de la taille d'un diaphragme perforé (8) disposé de manière confocale dans l'optique d'observation (7).

11. Procédé selon la revendication 10, **caractérisé en ce que** les éléments laser (22) émettent des faisceaux d'éclairage (3) qui sont modulés en longueur d'onde et présentent des longueurs d'onde différentes les unes des autres au sein d'une plage de longueurs d'onde.

12. Procédé selon la revendication 11, **caractérisé en ce que** les longueurs d'onde des divers éléments laser (22) sont réparties au sein de la plage de longueurs d'onde selon une répartition aléatoire.
